# EUROPÄISCHE PATENTSCHRIFT

(11) **EP 2 831 438 B1**
(45) Veröffentlichungstag und Bekanntmachung des Hinweises auf die Patenterteilung: **10.05.2017**
(21) Anmeldenummer: 13711853.5
(22) Anmeldetag: 12.03.2013
(51) Int. Cl.: F16D 13/75

(54) **REIBUNGSKUPPLUNGSEINRICHTUNG**
FRICTION CLUTCH DEVICE
EMBRAYAGE À FRICTION

(30) Priorität: 29.03.2012 DE 102012205065
(43) Veröffentlichungstag der Anmeldung: 04.02.2015
(73) Patentinhaber: Schaeffler Technologies AG & Co. KG, 91074 Herzogenaurach (DE)
(72) Erfinder: HEUBERGER, Sebastian, 77855 Achern (DE); RABER, Christoph, 66564 Ottweiler-Steinbach (DE)
(86) Internationale Anmeldenummer: PCT/EP2013/054980
(87) Internationale Veröffentlichungsnummer: WO 2013/143838

(56) Entgegenhaltungen:
- DE-A1- 10 158 362
- DE-A1- 19 541 172

## Beschreibung

Die Erfindung betrifft eine Reibungskupplungseinrichtung gemäß dem Oberbegriff des Patentanspruchs 1, insbesondere für einen Antriebsstrang eines brennkraftmaschinengetriebenen Kraftfahrzeugs, aufweisend eine Drehachse, ein Gehäuse, eine zur Betätigung relativ zu dem Gehäuse in Erstreckungsrichtung der Drehachse verlagerbare Anpressplatte und eine Nachstelleinrichtung zum Verschleißausgleich mit einem zur Betätigung der Nachstelleinrichtung verdrehbaren Verstellring.

Aus der DE 10 2008 051 100 A1 ist eine Reibungskupplung bekannt zumindest bestehend aus einem Kupplungsgehäuse mit einer drehfest und axial begrenzt zu dieser verlagerbaren Druckplatte, die von einem sich am Kupplungsgehäuse abstützenden Hebelsystem gegenüber einer am Kupplungsgehäuse fest angeordneten Anpressplatte unter Verspannung von Reibbelägen einer Kupplungsscheibe zum Öffnen und Schließen der Reibungskupplung axial verlagerbar ist, bei der in Abhängigkeit von einer Änderung eines Abstands zwischen Anpressplatte und Druckplatte ein Formschluss zwischen einer Verdreheinrichtung, die ein zwischen Druckplatte und dem Hebelsystem angeordnetes Rampensystem zum Ausgleich eines bei Verschleiß auftretenden Fehlabstands zwischen Druckplatte und Hebelsystem verdreht, und einer Steuereinrichtung, die die Verdreheinrichtung mittels des Formschlusses steuert, erfolgt und die Verdreheinrichtung mittels der Steuereinrichtung bei sich öffnender Reibungskupplung verdreht wird, um eine Reibungskupplung mit einer robusten, einfach herzustellenden und justierbaren Nachstelleinrichtung vorzuschlagen. Zur genaueren Information über die Merkmale der vorliegenden Erfindung wird ausdrücklich auf die Veröffentlichung DE 10 2008 051 100 A1 verwiesen. Die Lehre dieser Veröffentlichung ist als Bestandteil des vorliegenden Dokuments anzusehen. Merkmale dieser Veröffentlichung sind Merkmale des vorliegenden Dokuments.

Aus der DE 101 58 362 A1 ist eine Reibungskupplungseinrichtung bekannt, die auf den Oberbegriff des Patentanspruchs 1 lesbar ist.

Der Erfindung liegt die Aufgabe zugrunde, eine eingangs genannte Reibungskupplungseinrichtung baulich und/oder funktional zu verbessern.

Erfindungsgemäß gelöst wird diese Aufgabe durch eine Reibungskupplungseinrichtung gemäß Patentanspruch 1. Bevorzugte Ausführungsbeispiele der Erfindung sind in den abhängigen Ansprüchen dargelegt.

Die Reibungskupplungseinrichtung kann zur Anordnung in einem Antriebsstrang eines Kraftfahrzeugs dienen. Der Antriebsstrang kann eine Brennkraftmaschine aufweisen. Der Antriebsstrang kann einen Drehschwingungsdämpfer, insbesondere ein Zweimassenschwungrad, aufweisen. Der Antriebsstrang kann ein Getriebe aufweisen. Die Reibungskupplungseinrichtung kann in dem Antriebsstrang zwischen der Brennkraftmaschine und dem Getriebe anordenbar sein. Die Reibungskupplungseinrichtung kann in dem Antriebsstrang zwischen dem Drehschwingungsdämpfer und dem Getriebe anordenbar sein.

Die Reibungskupplungseinrichtung kann ein Eingangsteil aufweisen. Das Eingangsteil kann das Gehäuse aufweisen. Das Eingangsteil kann die Anpressplatte aufweisen. Die Anpressplatte kann begrenzt verlagerbar sein. Die Anpressplatte kann zwischen einer Ausrückposition und einer Einrückposition verlagerbar sein. Das Eingangsteil kann eine Gegendruckplatte aufweisen. Die Gegendruckplatte kann mit dem Gehäuse fest verbunden sein. Die Anpressplatte kann mit dem Gehäuse drehfest verbunden sein. Die Reibungskupplungseinrichtung kann ein Ausgangsteil aufweisen. Das Ausgangsteil kann eine Kupplungsscheibe aufweisen. Die Kupplungsscheibe kann Reibbeläge aufweisen. Die Reibbeläge können bei einem Betrieb der Reibungskupplungseinrichtung einem Verschließ unterliegen. Die Kupplungsscheibe kann eine Belagfederung aufweisen. Die Kupplungsscheibe kann in Erstreckungsrichtung der Drehachse zwischen der Anpressplatte und der Gegendruckplatte angeordnet sein. Die Kupplungsscheibe kann zwischen der Anpressplatte und der Gegendruckplatte zur kraft- und/oder reibschlüssigen Übertragung einer mechanischen Leistung einklemmbar sein. Verschleißbedingt kann sich die Einrückposition der Anpressplatte verschieben.

Die Reibungskupplungseinrichtung kann eine Betätigungseinrichtung aufweisen. Die Betätigungseinrichtung kann eine Federeinrichtung aufweisen. Die Federeinrichtung kann die Anpressplatte in Richtung der Einrückposition beaufschlagen. Die Reibungskupplungseinrichtung kann selbsttätig schließend sein. Die Federeinrichtung kann eine Tellerfeder aufweisen. Die Tellerfeder kann als Hebelfeder wirken. Das Eingangsteil der Reibungskupplungseinrichtung kann mit einer Ausgangswelle der Brennkraftmaschine antriebsverbindbar sein. Das Eingangsteil der Reibungskupplungseinrichtung kann mit einem Ausgangsteil des Drehschwingungsdämpfers antriebsverbindbar sein. Das Ausgangsteil der Reibungskupplungseinrichtung kann mit einer Eingangswelle des Getriebes antriebsverbindbar sein. Die Bezeichnungen "Eingangsteil" und "Ausgangsteil" sind auf eine von der Brennkraftmaschine ausgehende Leistungsflussrichtung bezogen.

Die Reibungskupplungseinrichtung kann eine Einscheibenkupplung sein. Die Reibungskupplungseinrichtung kann eine Mehrscheibenkupplung sein. Die Reibungskupplungseinrichtung kann eine Trockenkupplung sein. Die Reibungskupplungseinrichtung kann eine Nasskupplung sein. Die Reibungskupplungseinrichtung kann eine Einfachkupplung sein. Die Reibungskupplungseinrichtung kann eine Doppelkupplung sein. Die Doppelkupplung kann eine erste Kupplung und eine zweite Kupplung aufweisen. Die Reibungskupplungseinrichtung kann eine Zwischendruckplatte aufweisen. Die Zwischendruckplatte kann eine Anpressplatte einer Kupplung der Doppelkupplung sein. Die Reibungskupplungseinrichtung kann manuell betätigbar sein. Die Reibungskupplungseinrichtung kann automatisiert betätigbar sein. Die Betätigungseinrichtung kann einen Aktuator aufweisen.

Die Federeinrichtung kann mithilfe der Nachstelleinrichtung verstellbar sein. Der Verstellring kann um die Drehachse der Reibungskupplungseinrichtung verdrehbar sein. Ein Verdrehen des Verstellrings kann eine Verstellung der Federeinrichtung bewirken. Der Verstellring kann Rampen aufweisen. An der Anpressplatte können Gegenrampen angeordnet sein. Die Rampen des Verstellrings können mit den Gegenrampen der Anpressplatte korrespondieren. Die Nachstelleinrichtung kann zwischen der Federeinrichtung und der Anpressplatte angeordnet sein. An dem Gehäuse können Gegenrampen angeordnet sein. Die Rampen des Verstellrings können mit den Gegenrampen des Gehäuses korrespondieren. Die Nachstelleinrichtung kann zwischen der Federeinrichtung und dem Gehäuse angeordnet sein.

Die Nachstelleinrichtung kann einen wegbasierten Verschleißausgleich ermöglichen. Die Nachstelleinrichtung kann einen Spindeltrieb aufweisen. Der Spindelantrieb kann eine Wandlung einer Bewegung ermöglichen. Der Spindelantrieb kann eine Spindel aufweisen. Die Spindel kann um die Spindelachse drehbar sein. Die Spindel kann eine Gewindespindel sein. Die Spindel kann eine Schneckenspindel sein. Ein Drehen der Spindel kann ein Verdrehen des Verstellrings bewirken. Die Nachstelleinrichtung kann ein Antriebsritzel aufweisen. Das Antriebsritzel kann mit der Spindel drehfest verbunden sein. Das Antriebsritzel kann eine Außenverzahnung aufweisen. Die Zähne der Außenverzahnung können jeweils eine sägezahnartige Form aufweisen. Die Nachstelleinrichtung kann ein Hebelelement aufweisen. Das Hebelelement kann um die Spindelachse verdrehbar sein. Das Hebelelement kann relativ zur Spindel verdrehbar sein. Das Hebelelement kann relativ zum Antriebsritzel verdrehbar sein. Das Hebelelement kann eine Antriebsklinke aufweisen. Die Antriebsklinke kann mit dem Antriebsritzel korrespondieren.

Mit der erfindungsgemäßen Reibungskupplungseinrichtung wird eine unbeabsichtigte Betätigung der Nachstelleinrichtung verhindert. Es wird ein dynamisches Nachstellen verhindert. Eine unbeabsichtigte Betätigung der Nachstelleinrichtung aufgrund von Schwingungen im Antriebsstrang wird verhindert. Eine unbeabsichtigte Betätigung der Nachstelleinrichtung aufgrund von Axialschwingungen wird verhindert. Die Nachstelleinrichtung mit Sperreinrichtung weist nur wenige Bauteile auf. Die Nachstelleinrichtung mit Sperreinrichtung ist kostengünstig.

Die Sperreinrichtung kann oberhalb einer vorbestimmten Drehzahl wirksam sein und eine Verdrehbarkeit des Verstellrings sperren und unterhalb einer vorbestimmten Drehzahl unwirksam sein und eine Verdrehbarkeit des Verstellrings ermöglichen. Die vorbestimmte Drehzahl kann eine Drehzahl sein oberhalb der Schwingungen auftreten, die eine unbeabsichtigte Betätigung einer Nachstelleinrichtung bewirken können. Die vorbestimmte Drehzahl kann eine Drehzahl sein unterhalb der Schwingungen, die eine unbeabsichtigte Betätigung einer Nachstelleinrichtung bewirken können, nicht auftreten. Die vorbestimmte Drehzahl kann zumindest annähernd einer Leerlaufdrehzahl einer Brennkraftmaschine entsprechen. Die vorbestimmte Drehzahl in einem unteren Drehzahlbereich einer Brennkraftmaschine liegen.

Die Sperreinrichtung weist wenigstens ein erstes Sperrelement, das dem Gehäuse zugeordnet ist, und wenigstens ein zweites Sperrelement, das dem Verstellring zugeordnet ist, auf und das wenigstens eine erste Sperrelement und das wenigstens eine zweite Sperrelement können bei wirksamer Sperreinrichtung miteinander formschlüssig korrespondieren. Das wenigstens eine erste Sperrelement kann radial innerhalb des Verstellrings und das wenigstens eine zweite Sperrelement kann an dem Verstellring radial innenseitig angeordnet sein. Das wenigstens eine erste Sperrelement kann zwischen einer Sperrposition und einer Freigabeposition verlagerbar sein. Die Freigabeposition kann eine Vorzugsposition sein. Das wenigstens eine erste Sperrelement kann von der Kraft einer Feder in Richtung seiner Freigabeposition beaufschlagt sein. Bei einem Betrieb der Reibungskupplungseinrichtung kann eine Fliehkraft auf das wenigstens eine erste Sperrelement wirken. Die Fliehkraft kann eine Verlagerung des wenigstens einen ersten Sperrelements in seine Sperrposition bewirken. Die Fliehkraft kann der Kraft der Feder entgegenwirken.

Das wenigstens eine erste Sperrelement weist eine Schraubenfeder, insbesondere eine Zugfeder, und einen Federhalter auf. Die Schraubenfeder kann eine vorbestimmte Masse aufweisen. Die Schraubenfeder kann eine vorbestimmte Elastizität aufweisen. Der Federhalter kann eine vorbestimmte Masse aufweisen. Die Schraubenfeder kann eine zylindrische Form aufweisen. Die Schraubenfeder kann einen kreisartigen Querschnitt aufweisen. Die Schraubenfeder kann aus einem Material mit einem kreisartigen Querschnitt gewunden sein. Die Schraubenfeder kann eine quaderartige Form aufweisen. Die Schraubenfeder kann einen rechteckartigen Querschnitt aufweisen. Die Schraubenfeder kann aus einem Material mit einem rechteckartigen Querschnitt gewunden sein. Damit kann eine Masse des ersten Sperrelements, insbesondere der Schraubenfeder, erhöht sein. Die Schraubenfeder kann sich entlang einer Längsachse erstrecken. Die Schraubenfeder kann zwei in Längsrichtung gerichtete Endabschnitte aufweisen. Die Schraubenfeder kann einen sich in Längsrichtung erstreckenden kanalartigen Durchgang aufweisen. Die Schraubenfeder kann mit ihrem Durchgang auf dem Federhalter angeordnet sein. Der Federhalter kann eine größere Länge als die Schraubenfeder aufweisen.

Der Federhalter kann sich entlang einer Längsachse erstrecken. Der Federhalter kann eine blattartige Form aufweisen. Der Federhalter kann zwei in Längsrichtung gerichtete Endabschnitte aufweisen. Der Federhalter weist einen Mittenabschnitt mit einer bogenartig konturierten Ausnehmung auf. Der Mittenabschnitt kann zwischen den Endabschnitten angeordnet sein. Der Federhalter kann an den Endabschnitten eine größere Breite als an dem Mittenabschnitt aufweisen. Eine Breite der Endabschnitte kann zumindest annähernd einem Innendurchmesser der Schraubenfeder entsprechen. Die Ausnehmung des Mittenabschnitts kann derart konturiert sein, dass sich die Schraubenfeder bei einer Biegung anlegen kann. Der Federhalter kann aus einem Blech hergestellt sein. Der Federhalter kann in einem Stanzverfahren hergestellt sein.

Das wenigstens eine erste Sperrelement kann ein Führungselement zur Führung des wenigstens einen ersten Sperrelements mit einem Konturabschnitt für die Schraubenfeder aufweisen. Das Führungselement kann eine vorbestimmte Masse aufweisen. Das Führungselement kann Führungsabschnitte aufweisen, die dem Federhalter, insbesondere den Endabschnitten des Federhalters, zugeordnet sind. Das Führungselement kann Führungsabschnitte aufweisen, die der Schraubenfeder zugeordnet sind. Das Führungselement kann Führungsabschnitte aufweisen, die dem Gehäuse zugeordnet sind. Der Konturabschnitt kann eine bogenartig konturierte Form aufweisen. Die Form des Konturabschnitts des Führungselements kann der Ausnehmung des Mittenabschnitts des Federhalters zumindest annähernd entsprechen. Das Führungselement kann aus einem Blech hergestellt sein. Das Führungselement kann in einem Stanz-Biege-Verfahren hergestellt sein. Das Führungselement kann eine zusätzliche Masse des ersten Sperrelements bilden.

Die Schraubenfeder kann sich unter Fliehkrafteinwirkung entlang ihrer Längsachse biegen. Die Schraubenfeder kann sich unter Fliehkrafteinwirkung entlang ihrer Längsachse nach radial außen biegen. Eine Biegung der Schraubenfeder kann mithilfe der bogenartig konturierten Ausnehmung des Mittenabschnitts des Federhalters und/oder mithilfe des Konturabschnitts des Führungselements begrenzt sein. Die Schraubenfeder kann Windungen aufweisen. Bei einer Biegung der Schraubenfeder können sich einzelne Windungen abschnittsweise voneinander abheben. Bei einer Biegung der Schraubenfeder können sich radial außen einzelne Windungen abschnittsweise voneinander abheben. Bei einer Biegung der Schraubenfeder können zwischen Windungen Lücken auftreten. Bei einer Biegung der Schraubenfeder können radial außen zwischen Windungen Lücken auftreten. In maximal gebogener Position können die Endabschnitte der Schraubenfeder an dem Führungselement, insbesondere an der Schraubenfeder zugeordneten Führungsabschnitten, anliegen. In maximal gebogener Position können die Endabschnitte der Schraubenfeder an dem Führungselement, insbesondere an der Schraubenfeder zugeordneten Führungsabschnitten des Führungselements, zumindest annähernd spielfrei anliegen. Die Schraubenfeder kann eine derartige Länge aufweisen, dass ihre Endabschnitte in maximal gebogener Position an dem Führungselement, insbesondere an der Schraubenfeder zugeordneten Führungsabschnitten des Führungselements, zumindest annähernd spielfrei anliegen.

Das wenigstens eine zweite Sperrelement kann einen an dem Verstellring angeordneten Sperrzahn aufweisen. Das wenigstens eine zweite Sperrelement kann eine Breite aufweisen, die einer bei einer Biegung der Schraubenfeder auftretenden Lücke zwischen Windungen der Schraubenfeder zumindest annähernd entspricht. Bei einer Biegung der Schraubenfeder kann das wenigstens eine zweite Sperrelement in eine Lücke zwischen Windungen der Schraubenfeder eingreifen. Das wenigstens eine zweite Sperrelement kann endseitig eine Verjüngung aufweisen, um ein Eingreifen in eine Lücke zu unterstützen. Das wenigstens eine erste Sperrelement und das wenigstens eine zweite Sperrelement kann derart angeordnet sein, dass ein Eingriff über den gesamten Nachstellbereich der Nachstelleinrichtung ermöglicht ist.

Zusammenfassend und mit anderen Worten dargestellt ergibt sich somit durch die Erfindung unter anderem eine Fliehkraftsperre, bei der Enden einer Zugfeder auf einem Federhalter in axialer Richtung geführt werden können. Ein mittlerer Bereich kann frei sein und die Feder kann, bedingt durch die wirkende Fliehkraft, sich nach außen verformen. Hierbei kann die Feder in eine Verzahnung eines Verstellringes eingreifen. Durch das abgestimmte Maß der Feder in Zusammenspiel mit einem Sperrzahn des Verstellringes kann sich ein Blockmaß ergeben wodurch der Verstellring seine Position nicht verändern kann. Die Sperrgenauigkeit kann durch die Drahtstärke der Feder erreicht werden.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: eine fliehkraftbetätigte Sperreinrichtung für eine Nachstelleinrichtung in einer Freigabeposition,
- Fig. 2: eine fliehkraftbetätigte Sperreinrichtung für eine Nachstelleinrichtung in einer Sperrposition,
- Fig. 3: ein Sperrelement einer fliehkraftbetätigten Sperreinrichtung für eine Nachstelleinrichtung in Einzelteildarstellung,
- Fig. 4: ein Sperrelement einer fliehkraftbetätigten Sperreinrichtung für eine Nachstelleinrichtung in zusammengebauter Darstellung,
- Fig. 5: eine fliehkraftbetätigte Sperreinrichtung für eine Nachstelleinrichtung in Einbaulage an einer Kupplung in Draufsicht,
- Fig. 6: eine fliehkraftbetätigte Sperreinrichtung für eine Nachstelleinrichtung in Einbaulage an einer Kupplung in Schnittansicht und
- Fig. 7: ein Sperrelement einer fliehkraftbetätigten Sperreinrichtung für eine Nachstelleinrichtung in rechteckiger Ausführung.

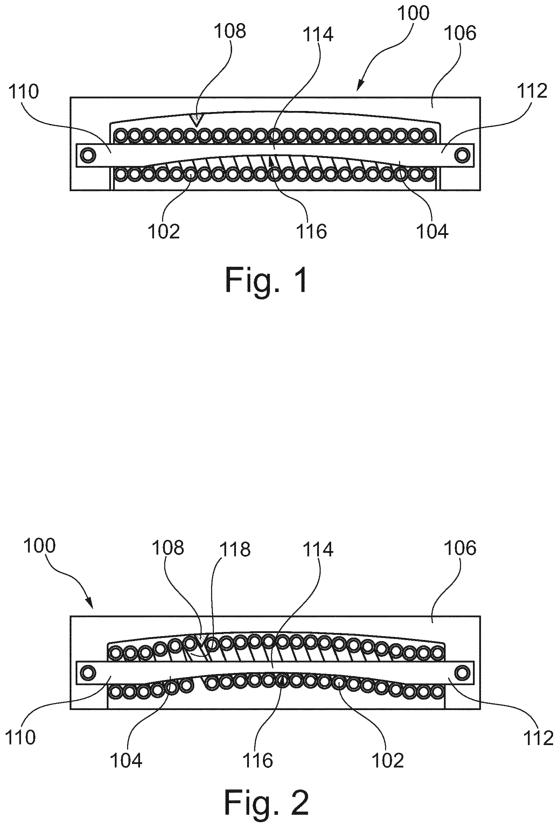

Fig. 1 zeigt eine fliehkraftbetätigte Sperreinrichtung 100 für eine Nachstelleinrichtung in einer Freigabeposition. Die Sperreinrichtung 100 weist ein erstes Sperrelement mit einer Schraubenfeder 102 und einem Federhalter 104 auf. Das erste Sperrelement ist an einem Gehäuse 106 einer Kupplung angeordnet. Die Sperreinrichtung 100 weist ein zweites Sperrelement mit einem Sperrzahn 108 auf. Das zweite Sperrelement ist an einem Verstellring der Kupplung angeordnet. Der Federhalter 104 ist durch die Schraubenfeder 102 hindurch geführt. Der Federhalter 104 weist zwei Endabschnitte 110, 112 und einen Mittenabschnitt 114 auf. Die Endabschnitte 110, 112 des Federhalters 104 weisen jeweils eine einem Innendurchmesser der Schraubenfeder 102 in etwa entsprechende Breite auf. Damit ist die Feder an den Endabschnitte 110, 112 des Federhalters 104 gehalten. Der Federhalter 104 weist eine größere Länge als die Schraubenfeder 102 auf. Die Endabschnitte 110, 112 des Federhalters 104 sind mit dem Gehäuse 106 der Kupplung fest verbunden, beispielsweise vernietet oder verschraubt. Radial innenseitig weist der Mittenabschnitt 114 eine bogenartig konturierte Ausnehmung 116 auf. Radial außenseitig weist der Mittenabschnitt 114 eine gerade verlaufende Kontur auf.

In der Freigabeposition verläuft die Schraubenfeder 102 gerade. In der Freigabeposition ist die Schraubenfeder 102 an der gerade verlaufenden Kontur des Federhalters 104 gehalten. In Längsrichtung ist die Schraubenfeder 102 an dem Federhalter 104 spielbehaftet gehalten. Der Sperrzahn 108 befindet sich nicht in Eingriff mit der Schraubenfeder 102. Das erste Sperrelement und das zweite Sperrelement sind miteinander nicht verbunden. Eine Relativbewegung des ersten Sperrelements und des zweiten Sperrelements zueinander ist ermöglicht. Aufgrund ihrer inneren Vorspannung ist die Schraubenfeder 102 in Richtung der Freigabeposition vorgespannt. Eine Sperrposition der Sperreinrichtung 100 ist in Fig. 2 gezeigt. In der Sperrposition verläuft die Schraubenfeder 102 nach radial außen gebogen. In der Sperrposition ist die Schraubenfeder 102 an der bogenartig konturierten Ausnehmung 116 des Federhalters 104 gehalten. In Längsrichtung ist die Schraubenfeder 102 in der Sperrposition zumindest annähernd spielfrei gehalten. Aufgrund ihrer Biegung ergeben sich in radialer Kupplungsrichtung außenseitig zwischen Windungen der Schraubenfeder 102 Lücken, wie 118. Der Sperrzahn 108 greift in eine Lücke 118 der Schraubenfeder 102 ein. Das erste Sperrelement und das zweite Sperrelement sind miteinander formschlüssig verbunden. Eine Bewegbarkeit des ersten Sperrelements und des zweiten Sperrelements relativ zueinander ist gesperrt. Bei einem Betrieb der Kupplung wirkt eine Fliehkraft auf die Schraubenfeder 102. Diese Fliehkraft wirkt der inneren Vorspannung der Schraubenfeder 102 entgegen. Sobald die Fliehkraft einen vorbestimmten Wert übersteigt, erfolgt eine Verlagerung der Schraubenfeder 102 von der Freigabeposition in die Sperrposition. Sobald die Fliehkraft einen vorbestimmten Wert unterschreitet, erfolgt eine Verlagerung der Schraubenfeder 102 von der Sperrposition in die Freigabeposition.

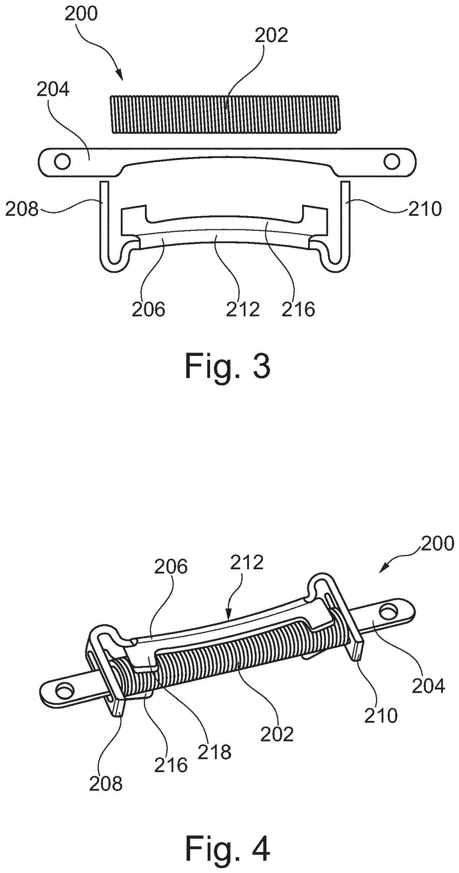

Fig. 3 zeigt ein Sperrelement 200 einer fliehkraftbetätigten Sperreinrichtung für eine Nachstelleinrichtung in Einzelteildarstellung. Fig. 4 zeigt das Sperrelement 200 in zusammengebauter Darstellung. Das Sperrelement 200 entspricht funktional dem ersten Sperrelement der Sperreinrichtung 100 gemäß Fig. 1. Das Sperrelement 200 ist zur Anordnung an einem Gehäuse einer Kupplung bestimmt. Das Sperrelement 200 weist eine Schraubenfeder 202, einen Federhalter 204 und ein Führungselement 206 auf. Das Führungselement 206 weist zwei Halteabschnitte 208, 210 auf. Die Halteabschnitte 208, 210 weisen jeweils einen Schlitz auf. Die Schlitze der Halteabschnitte 208, 210 dienen zur Aufnahme des Federhalters 204. Die Schlitze der Halteabschnitte 208, 210 weisen eine größere Breite als der Federhalter 204 auf, sodass der Federhalter 204 in radialer Kupplungsrichtung relativ zu dem Führungselement 206 verlagerbar ist. Der Federhalter 204 weist eine Masse auf, an der eine Fliehkraft angreifen kann. Die Halteabschnitte 208, 210 weisen einander zugewandt jeweils eine Innenseite auf. Die Innenseiten der Halteabschnitte 208, 210 dienen zur Abstützung der Schraubenfeder 202 insbesondere in der Sperrposition. Die Halteabschnitte 208, 210 weisen jeweils eine Außenseite auf. Die Außenseiten dienen zur Führung an einem Gehäuse der Kupplung in radialer Kupplungsrichtung. Das Führungselement 206 weist einen Konturabschnitt 212 für die Schraubenfeder 202 auf. Der Konturabschnitt 212 korrespondiert formmäßig mit einer bogenartig konturierten Ausnehmung 214 des Federhalters 204. In der Sperrposition liegt die gebogene Schraubenfeder 202 an der bogenartig konturierten Ausnehmung 214 des Federhalters 204 einerseits und an dem Konturabschnitt 212 andererseits an. Das Führungselement 206 weist seitliche Halteabschnitte 216, 218 auf. Die seitlichen Halteabschnitte 216, 218 dienen zum Halten der Schraubenfeder 202 in Erstreckungsrichtung einer Drehachse der Kupplung. Im Übrigen wird ergänzend insbesondere auf Fig. 1 und Fig. 2 sowie die zugehörige Beschreibung verwiesen.

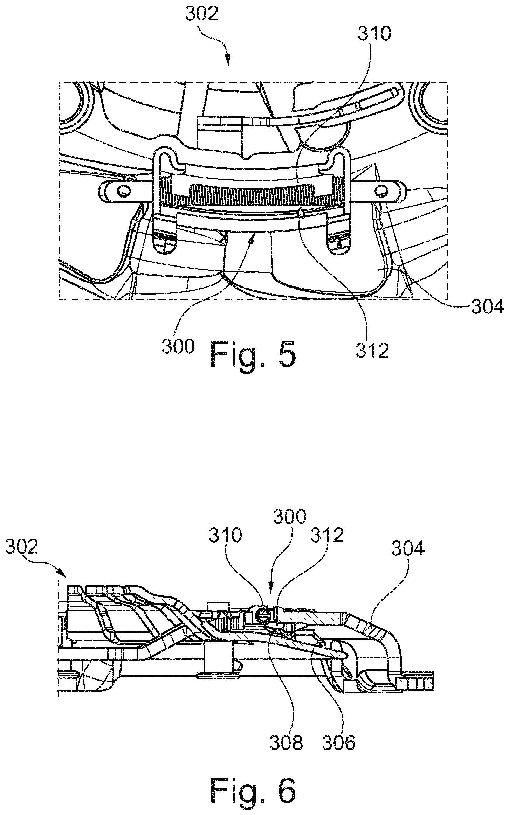

Fig. 5 zeigt eine fliehkraftbetätigte Sperreinrichtung 300 für eine Nachstelleinrichtung in Einbaulage an einer Kupplung 302 in Draufsicht. Fig. 6 zeigt die Kupplung 302 mit Sperreinrichtung 300 für die Nachstelleinrichtung in Schnittansicht. Die Kupplung 302 weist ein Gehäuse 304 und eine Anpressplatte auf. Die Anpressplatte ist mit dem Gehäuse 304 drehfest verbunden und in Richtung einer Drehachse der Kupplung 302 relativ zu dem Gehäuse 304 verlagerbar. Die Anpressplatte ist von der Kraft einer Tellerfeder 306 beaufschlagt. Die Tellerfeder 306 ist verschwenkbar gelagert. Ein Verschwenken der Tellerfeder 306 bewirkt eine Verlagerung der Anpressplatte und damit eine Betätigung der Kupplung 302. Zwischen der Anpressplatte und der Tellerfeder 306 ist ein Verstellring 308 angeordnet. Der Verstellring 308 ist relativ zu der Anpressplatte verdrehbar. Die Anpressplatte und der Verstellring 308 weisen korrespondierende Rampenabschnitte auf. Eine Verdrehung des Verstellrings 308 bewirkt eine Verlagerung der Anpressplatte und damit eine Verschleißnachstellung der Kupplung 302.

Zum verschleißabhängigen Verdrehen des Verstellrings 308 ist ein hier nicht dargestellter Spindeltrieb vorgesehen. Die Sperreinrichtung 300 weist ein erstes Sperrelement 310, wie Sperrelement 200 gemäß Fig. 3 und Fig. 4, auf. Das erste Sperrelement 310 ist an dem Gehäuse 304 einer Kupplung 302 angeordnet. Die Sperreinrichtung 300 weist ein zweites Sperrelement mit einem Sperrzahn 312 auf. Das zweite Sperrelement ist an dem Verstellring 308 der Kupplung 302 angeordnet. Das erste Sperrelement 310 ist radial innerhalb des Verstellrings 308 angeordnet. Der Sperrzahn 312 ist an dem Verstellring 308 nach radial innen gerichtet angeordnet. Im Übrigen wird ergänzend insbesondere auf Fig. 1, Fig. 2, Fig. 3 und Fig. 4 sowie die zugehörige Beschreibung verwiesen.

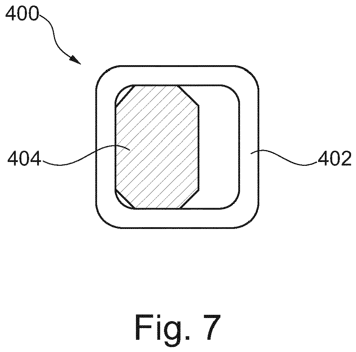

Fig. 7 zeigt ein Sperrelement 400 einer fliehkraftbetätigten Sperreinrichtung für eine Nachstelleinrichtung in rechteckiger Ausführung. Das Sperrelement 400 entspricht funktional dem ersten Sperrelement der Sperreinrichtung 100 gemäß Fig. 1. Die Schraubenfeder 402 weist einen rechteckigen Querschnitt auf. Der Federhalter 404 weist einen korrespondierenden Querschnitt auf und kann damit zur Führung der Schraubenfeder 402 dienen. Die Schraubenfeder 402 kann aus einem Draht mit einem rechteckigen Querschnitt hergestellt sein. Im Übrigen wird ergänzend insbesondere auf Fig. 1, Fig. 2, Fig. 3, Fig. 4, Fig. 5 und Fig. 6 sowie die zugehörige Beschreibung verwiesen.

### Bezugszeichenliste

- 100: Sperreinrichtung
- 102: Schraubenfeder
- 104: Federhalter
- 106: Gehäuse
- 108: Sperrzahn
- 110: Endabschnitt
- 112: Endabschnitt
- 114: Mittenabschnitt
- 116: Ausnehmung
- 118: Lücke

- 200: Sperrelement
- 202: Schraubenfeder
- 204: Federhalter
- 206: Führungselement
- 208: Halteabschnitt
- 210: Halteabschnitt
- 212: Konturabschnitt
- 214: Ausnehmung
- 216: seitlicher Halteabschnitt
- 218: seitlicher Halteabschnitt

- 300: Sperreinrichtung
- 302: Kupplung
- 304: Gehäuse
- 306: Tellerfeder
- 308: Verstellring
- 310: erstes Sperrelement
- 312: Sperrzahn

- 400: Sperrelement
- 402: Schraubenfeder
- 404: Federhalter

## Patentansprüche

1. Reibungskupplungseinrichtung (302), insbesondere für einen Antriebsstrang eines brennkraftmaschinengetriebenen Kraftfahrzeugs, aufweisend eine Drehachse, ein Gehäuse (106, 304), eine zur Betätigung relativ zu dem Gehäuse (106, 304) in Erstreckungsrichtung der Drehachse verlagerbare Anpressplatte und eine Nachstelleinrichtung zum Verschleißausgleich mit einem zur Betätigung der Nachstelleinrichtung verdrehbaren Verstellring (308), wobei die Nachstelleinrichtung eine Sperreinrichtung (100, 300) zum Sperren einer unbeabsichtigten Betätigung aufweist und die Sperreinrichtung (100, 300) fliehkraftabhängig wirksam ist, wobei die Sperreinrichtung (100, 300) wenigstens ein erstes Sperrelement (200, 310, 400), das dem Gehäuse (106, 304) zugeordnet ist und eine Schraubenfeder (102, 202, 402) und einen Federhalter (104, 204, 404) aufweist, und wenigstens ein zweites Sperrelement, das dem Verstellring (308) zugeordnet ist, aufweist und das wenigstens eine erste Sperrelement (200, 310, 400) und das wenigstens eine zweite Sperrelement bei wirksamer Sperreinrichtung (100, 300) miteinander formschlüssig korrespondieren, **dadurch gekennzeichnet, dass** der Federhalter (104, 204, 404) einen Mittenabschnitt (114) mit einer bogenartig konturierten Ausnehmung (116, 214) aufweist.

2. Reibungskupplungseinrichtung (302) nach Anspruch 1, **dadurch gekennzeichnet, dass** die Sperreinrichtung (100, 300) oberhalb einer vorbestimmten Drehzahl wirksam ist und eine Verdrehbarkeit des Verstellrings (308) sperrt und unterhalb einer vorbestimmten Drehzahl unwirksam ist und eine Verdrehbarkeit des Verstellrings (308) ermöglicht.

3. Reibungskupplungseinrichtung (302) nach Anspruch 1 oder 2, **dadurch gekennzeichnet, dass** das wenigstens eine erste Sperrelement (200, 310, 400) radial innerhalb des Verstellrings (308) und das wenigstens eine zweite Sperrelement an dem Verstellring (308) radial innenseitig angeordnet ist.

4. Reibungskupplungseinrichtung (302) nach einem der Ansprüche 1 bis 3, **dadurch gekennzeichnet, dass** die Schraubenfeder (102, 202, 402) des ersten Sperrelements (200, 310, 400) als Zugfeder ausgebindet ist.

5. Reibungskupplungseinrichtung (302) nach einem der Ansprüche 1 bis 4, **dadurch gekennzeichnet, dass** das wenigstens eine erste Sperrelement (200, 310, 400) ein Führungselement (206) zur Führung des wenigstens einen ersten Sperrelements (200, 310, 400) mit einem Konturabschnitt (212) für die Schraubenfeder (102, 202, 402) aufweist.

6. Reibungskupplungseinrichtung (302) nach einem der Ansprüche 1 bis 5, **dadurch gekennzeichnet, dass** das wenigstens eine zweite Sperrelement einen an dem Verstellring (308) angeordneten Sperrzahn (108, 312) aufweist.

7. Reibungskupplungseinrichtung (302) nach einem der Ansprüche 1 bis 6, **dadurch gekennzeichnet, dass** das wenigstens eine erste Sperrelement (200, 310, 400) und das wenigstens eine zweite Sperrelement derart angeordnet sind, dass ein Eingriff über den gesamten Nachstellbereich der Nachstelleinrichtung ermöglicht ist.

## Claims

1. Friction clutch device (302), in particular for a drive train of a motor vehicle which is driven by internal combustion engine, having a rotational axis, a housing (106, 304), a pressure plate which can be moved relative to the housing (106, 304) in the direction of extent of the rotational axis for actuation purposes, and an adjusting device for wear compensation by way of an adjusting ring (308) which can be rotated in order to actuate the adjusting device, the adjusting device having a locking device (100, 300) for locking an unintentional actuation, and the locking device (100, 300) being active in a manner which is dependent on centrifugal force, the locking device (100, 300) having at least one first locking element (200, 310, 400) which is assigned to the housing (106, 304), a helical spring (102, 202, 402) and a spring holder (104, 204, 404), and having at least one second locking element which is assigned to the adjusting ring (308), and the at least one locking element (200, 310, 400) and the at least one second locking element corresponding with one another in a positively locking manner in the case of an active locking device (100, 300), **characterized in that** the spring holder (104, 204, 404) has a centre section (114) with an arcuately contoured recess (116, 214).

2. Friction clutch device (302) according to Claim 1, **characterized in that** the locking device (100, 300) is active above a predefined rotational speed and blocks a rotatability of the adjusting ring (308), and is inactive below a predefined rotational speed and makes a rotatability of the adjusting ring (308) possible.

3. Friction clutch device (302) according to Claim 1 or 2, **characterized in that** the at least one first locking element (200, 310, 400) is arranged radially within the adjusting ring (308), and the at least one second locking element is arranged on the adjusting ring (308) radially on the inner side.

4. Friction clutch device (302) according to one of Claims 1 to 3, **characterized in that** the helical spring (102, 202, 402) of the first locking element (200, 310, 400) is configured as a tension spring.

5. Friction clutch device (302) according to one of Claims 1 to 4, **characterized in that** the at least one first locking element (200, 310, 400) has a guide element (206) for guiding the at least one first locking element (200, 310, 400) with a contour section (212) for the helical spring (102, 202, 402).

6. Friction clutch device (302) according to one of Claims 1 to 5, **characterized in that** the at least one second locking element has a locking pawl (108, 312) which is arranged on the adjusting ring (308).

7. Friction clutch device (302) according to one of Claims 1 to 6, **characterized in that** the at least one first locking element (200, 310, 400) and the at least one second locking element are arranged in such a way that an engagement is made possible over the entire adjusting range of the adjusting device.

## Revendications

1. Dispositif d'embrayage à friction (302), en particulier pour une chaîne cinématique d'un véhicule automobile entraîné par un moteur à combustion interne, présentant un axe de rotation, un boîtier (106, 304), un plateau de pression déplaçable dans la direction d'extension de l'axe de rotation pour l'actionnement par rapport au boîtier (106, 304) et un dispositif d'ajustage pour la compensation de l'usure avec une bague de réglage rotative (308) pour l'actionnement du dispositif d'ajustage, dans lequel le dispositif d'ajustage présente un dispositif de blocage (100, 300) pour le blocage d'un actionnement inopiné et le dispositif de blocage (100, 300) est actif en fonction de la force centrifuge, dans lequel le dispositif de blocage (100, 300) présente au moins un premier élément de blocage (200, 310, 400), qui est associé au boîtier (106, 304) et un ressort hélicoïdal (102, 202, 402) et un support de ressort (104, 204, 404), et au moins un deuxième élément de blocage, qui est associé à la bague de réglage (308), et ledit au moins un premier élément de blocage (200, 310, 400) et ledit au moins un deuxième élément de blocage se correspondent mutuellement par emboîtement lorsque le dispositif de blocage (100, 300) est actif, **caractérisé en ce que** le support de ressort (104, 204, 404) présente une partie centrale (114) avec un évidement (116, 214) profilé en forme d'arc.

2. Dispositif d'embrayage à friction (302) selon la revendication 1, **caractérisé en ce que** le dispositif de blocage (100, 300) est actif au-delà d'une vitesse de rotation prédéterminée et bloque une rotation de la bague de réglage (308) et est inactif en deçà d'une vitesse de rotation prédéterminée et permet une rotation de la bague de réglage (308).

3. Dispositif d'embrayage à friction (302) selon la revendication 1 ou 2, **caractérisé en ce que** ledit au moins un premier élément de blocage (200, 310, 400) est disposé radialement à l'intérieur de la bague de réglage (308) et ledit au moins un deuxième élément de blocage est disposé sur le côté radialement intérieur de la bague de réglage (308).

4. Dispositif d'embrayage à friction (302) selon l'une quelconque des revendications 1 à 3, **caractérisé en ce que** le ressort hélicoïdal (102, 202, 402) du premier élément de blocage (200, 310, 400) est un ressort de traction.

5. Dispositif d'embrayage à friction (302) selon l'une quelconque des revendications 1 à 4, **caractérisé en ce que** ledit au moins un élément de blocage (200, 310, 400) présente un élément de guidage (206) pour le guidage dudit au moins un élément de blocage (200, 310, 400) avec une partie profilée (212) pour le ressort hélicoïdal (102, 202, 402).

6. Dispositif d'embrayage à friction (302) selon l'une quelconque des revendications 1 à 5, **caractérisé en ce que** ledit au moins un deuxième élément de blocage présente une dent de blocage (108, 312) disposée sur la bague de réglage (308).

7. Dispositif d'embrayage à friction (302) selon l'une quelconque des revendications 1 à 6, **caractérisé en ce que** ledit au moins un premier élément de blocage (200, 310, 400) et ledit au moins un deuxième élément de blocage sont disposés de telle manière qu'une intervention sur toute la plage d'ajustage du dispositif d'ajustage soit possible.
